# EUROPÄISCHE PATENTSCHRIFT

(11) **EP 3 581 503 B1**
(45) Veröffentlichungstag und Bekanntmachung des Hinweises auf die Patenterteilung: **21.10.2020**
(21) Anmeldenummer: 18177062.9
(22) Anmeldetag: 11.06.2018
(51) Int. Cl.: B65B 13/32, B65B 13/30, B65B 57/00, B29C 65/00, B29C 65/14, B29C 65/74, B29C 65/78, B29L 31/00

(54) **VERFAHREN UND VORRICHTUNG ZUR HERSTELLUNG EINER UMREIFUNG**
METHOD AND DEVICE FOR MANUFACTURING STRAPPING
PROCÉDÉ ET DISPOSITIF DE FABRICATION D'UNE BANDE DE CERCLAGE

(43) Veröffentlichungstag der Anmeldung: 18.12.2019
(73) Patentinhaber: TITAN Umreifungstechnik GmbH & Co.KG, 58332 Schwelm (DE)
(72) Erfinder: Cunha, José, 58300 Wetter (DE); Nölke, Christian, 40627 Düsseldorf (DE); Dahlhaus, Ralf, 58339 Breckerfeld (DE)
(74) Vertreter: Andrejewski - Honke Patent- und Rechtsanwälte Partnerschaft mbB

(56) Entgegenhaltungen:
- WO-A1-2016/096003
- DE-A1-102014 211 849
- DE-T2- 60 116 973

## Beschreibung

Die Erfindung betrifft ein Verfahren zur Herstellung einer Umreifung, wonach ein Umreifungsband um wenigstens ein Packstück herumgeführt, gespannt und in einer Verschlusseinheit an zu verbindenden Bandenden mit einem Verschluss ausgerüstet wird, und wonach zumindest ein an eine Steuereinheit angeschlossener Sensor in der Verschlusseinheit vorgesehen ist, um einen oder mehrere Verschlussparameter mittels der Steuereinheit zu erfassen und die Verschlusseinheit entsprechend anzusteuern.

Umreifungsvorrichtungen und entsprechende Verfahren zur Herstellung einer Umreifung zählen seit Jahren und in unterschiedlichen Ausführungen zum Stand der Technik. Bei den zu umreifenden Packstücken kann es sich um Pakete, Zeitschriften aber auch Metallbandcoils, Ballen etc. handeln. Die Umreifung stellt dabei jeweils sicher, dass das Packstück beispielsweise während des Transports nicht aufgeht oder auseinanderfällt.

Insbesondere bei der Umreifung von Ballen mithilfe von geschweißten Kunststoffbändern treten dynamische Belastungen auf, die so groß sind oder werden können, dass die Umreifungsbänder reißen. Hier ist insbesondere eine bei Kunststoffbändern übliche Schweißverbindung an den Bandenden anfällig. Dadurch können sich nicht nur Probleme beim Transport, sondern auch bei der anschließenden Handhabung ergeben.

Die grundsätzliche Vorgehensweise bei der Herstellung einer Umreifung und auch eine entsprechend gestaltete Vorrichtung werden beispielhaft in der DE 10 2008 022 396 B3 der Anmelderin beschrieben. Darüber hinaus existieren im Stand der Technik nach der DE 198 31 665 A1 bereits Ansätze dahingehend, einen Schweißvorgang bei Kunststoffbändern zu erfassen. Zu diesem Zweck ist eine Heizeinrichtung mit einer Ausschaltvorrichtung ausgerüstet, die mittelbar oder unmittelbar von einem Druckelement betätigt wird. Dem Druckelement ist ein Sensor mit Signalgeber zugeordnet, welcher Änderungen des Abstandes zwischen dem Druckelement und einer Stützfläche erfasst. Entsprechende Signale werden einer Auswerte-Elektronik zugeführt, die ein Ausschaltsignal zum Ausschalten der Heizeinrichtung erzeugt, wenn der Abstand zwischen dem Druckelement und der Stützfläche einen vorherbestimmten Sollwert erreicht.

Beim gattungsbildenden Stand der Technik nach der DE 10 2014 211 849 A1 wird so vorgegangen, dass ein oder mehrere physikalische Ist-Parameter des Schweißkopfes eines Umreifungsbandes und/oder der im Bereich der Schweißstelle hergestellten stoffschlüssigen Verbindung sensorisch erfasst und/oder sensorisch festgestellt werden. Die physikalischen Ist-Parameter werden an eine rechnergestützte Steuerungseinrichtung übertragen.

Unter Berücksichtigung der physikalischen Ist-Parameter werden nun ein Temperaturniveau des Schweißkopfes und/oder die Verweildauer einer Temperaturbeaufschlagung und/oder eine Dauer bzw. Kraft der Anlage eines Stempels an einer Druckplatte über die rechnergestützte Steuerungseinrichtung vorgegeben. Auf diese Weise soll bei der Verschweißung von Umreifungsbändern aus Kunststoff eine konstant hohe Qualität der zu erzielenden Verschweißung garantiert werden.

Die beschriebene Lehre nach der DE 10 2014 211 849 A1 hat sich zwar generell bewährt, bleibt jedoch im Hinblick auf die konkrete Umsetzung vage. Außerdem steht hier die unmittelbare Steuerung des Schweißvorganges bei der Herstellung des Verschlusses bei Umreifungsbändern aus Kunststoff im Vordergrund. Etwaige Rückschlüsse beispielsweise zur Ermittlung des Verschleißes an der Verschlusseinheit oder auch zur weiteren Auswertung der erfassten Sensorsignale können nicht gezogen werden. Hier setzt die Erfindung ein.

Der Erfindung liegt das technische Problem zugrunde, ein derartiges Verfahren zur Herstellung einer Umreifung so weiterzuentwickeln, dass die erfassten Sensorsignale nicht nur zur Realisierung eines sicheren Verschlusses eingesetzt werden können, sondern auch eine Verschlussdokumentation zur Verfügung gestellt wird. Ebenfalls soll eine entsprechend geeignete Vorrichtung angegeben werden.

Zur Lösung dieser technischen Problemstellung ist ein gattungsgemäßes Verfahren zur Herstellung einer Umreifung im Rahmen der Erfindung dadurch gekennzeichnet, dass der Sensor als in einen Andrückstempel der Verschlusseinheit eingelassene Kraftmessdose ausgebildet ist. - Bei einer solchen Kraftmessdose oder allgemein einem Kraftaufnehmer handelt es sich um einen Sensor bzw. Kraftsensor, mit dessen Hilfe die Kraft gemessen wird, die auf ihn wirkt. Vorliegend ist der Sensor in den Andrückstempel der Verschlusseinheit eingelassen, so dass mit seiner Hilfe die vom Andrückstempel auf die zu verbindenden Bandenden des Umreifungsbandes ausgeübte Kraft bei der Herstellung des Verschlusses erfindungsgemäß mithilfe der Kraftmessdose erfasst wird.

Dabei können sämtliche aus der Praxis bekannten Bauarten für einen solchen Kraftaufnehmer bzw. eine Kraftmessdose zum Einsatz kommen. Beispiele hierfür sind ein Federkörper-Kraftaufnehmer, dessen Federkörper elastisch verformt wird. Die Verformung des Federkörpers wird über Dehnungsmessstreifen erfasst, deren elektrischer Widerstand sich mit der Dehnung ändert. Als Folge hiervon wird eine sich ändernde elektrische Spannung als Sensorsignal beobachtet. Prinzipiell kann auch mit einem Piezo-Kraftaufnehmer gearbeitet werden, bei dem in einem Piezokeramik-Element durch Krafteinwirkung eine proportional zur Kraft entstehende Ladungsverteilung beobachtet wird. Die Ladungsverteilung kann mit einem Ladungsverstärker gemessen und als entsprechendes Sensorsignal ausgangsseitig zur Verfügung gestellt werden. Prinzipiell lassen sich auch rezeptive Kraftaufnehmer realisieren, bei denen es unter Krafteinwirkung zu einer Veränderung ihres elektrischen Widerstandes kommt. In diesem Fall wird der elektrische Widerstand bzw. seine Widerstandsänderung als Sensorsignal ausgangsseitig zur Verfügung gestellt. Die genannten Kraftaufnehmer bzw. unterschiedlich arbeitenden Kraftmessdosen stellen selbstverständlich nur Beispiele dar und sind keinesfalls einschränkend zu betrachten.

Die entsprechenden Sensorsignale bzw. Kraftsignale werden an die Steuereinheit übermittelt. Die Steuereinheit sorgt nun erfindungsgemäß nicht nur dafür, dass die Verschlusseinheit entsprechend angesteuert wird, das heißt je nach gemessener Kraft am Andrückstempel der Andrückstempel beispielsweise weiter beaufschlagt, angehalten oder zurückgezogen wird. Hier kann generell mit einer Regelung der Kraft am Andrückstempel in Abhängigkeit von den Sensorsignalen der Kraftmessdose gearbeitet werden. Sondern erfindungsgemäß können die Sensorsignale der Kraftmessdose in der Steuereinheit gegebenenfalls zusammen mit zusätzlichen Sensorsignalen weiterer Sensoren aufgenommen und mit den für das Umreifungsband spezifischen Parametern bzw. Verschlussparametern verknüpft werden, um auf dieser Basis vorzugsweise eine Andrückkraft des Andrückstempels zu variieren.

Wie zuvor bereits erläutert, wird folglich die mithilfe des Sensors bzw. der Kraftmessdose am Andrückstempel der Verschlusseinheit vorhandene bzw. aufgebrachte Kraft gemessen und an die Steuereinheit übermittelt. In Abhängigkeit der auf diese Weise erfassten Andrückkraft des Andrückstempels kann eine Variation dieser Andrückkraft erfolgen. Das kann im Sinne einer Regelung oder Steuerung der Kraft am Andrückstempel in Abhängigkeit von den Sensorsignalen der Kraftmessdose erfolgen. Dazu mag die Andrückkraft des Andrückstempels mithilfe der Steuereinheit entsprechend angesteuert werden. Alternativ oder zusätzlich ist aber auch eine Änderung der Andrückkraft beispielsweise durch eine Änderung entsprechend vorgesehener Federn möglich, um die Vorspannung des Andrückstempels zu verändern.

Bei diesen für das Umreifungsband spezifischen Parametern bzw. Verschlussparametern handelt es sich um Eigenschaftswerte, die das eingesetzte und um das eine oder die mehreren Packstücke herumgeführte Umreifungsband charakterisieren. Kommen beispielsweise Umreifungsbänder aus Kunststoff zum Einsatz, so handelt es sich bei den für das Umreifungsband spezifischen Verschlussparametern beispielsweise um die geometrischen Abmessungen des Umreifungsbandes, dessen Materialstärke und seine Zusammensetzung bzw. den für seine Herstellung eingesetzten Kunststoff oder die Mehrzahl an Kunststoffen. Grundsätzlich kann es sich bei dem für das Umreifungsband spezifischen Verschlussparameter oder den mehreren Parametern auch schlicht und ergreifend um eine Artikelnummer handeln, unter welcher die zuvor genannten Verschlussparameter zusammengefasst sind. Das gilt selbstverständlich nur beispielhaft.

Jedenfalls werden die Sensorsignale der Kraftmessdose gegebenenfalls mit zusätzlichen Sensorsignalen weiterer Sensoren in der Steuereinheit mit den für das Umreifungsband spezifischen Verschlussparametern verknüpft. Auf diese Weise definieren die Sensorsignale und die für das Umreifungsband spezifischen Verschlussparameter zusammengenommen Verschlussdaten. Diese Verschlussdaten können nun ausgewertet werden. Eine Möglichkeit zur Auswertung der Verschlussdaten besteht darin, eine Verschleißermittlung für die eingesetzte Verschlusseinheit vorzunehmen. Beispielsweise kann anhand der mithilfe des Andrückstempels gemessenen Kräfte ebenso wie unter Berücksichtigung der Anzahl an Verschlusszyklen abgeschätzt werden, wann eine Wartung der Verschlusseinheit erforderlich ist und wie groß der aktuelle Verschleiß der Verschlusseinheit gegenüber beispielsweise einem Neuteil ausgeprägt ist.

Außerdem lassen sich aus den Verschlussdaten Werte für den Verbrauch an Umreifungsbandmaterial ermitteln. Aus diesen Verbrauchswerten an Umreifungsbandmaterial kann abgeschätzt und abgeleitet werden, wann der beispielsweise am Ort der entsprechenden Umreifungsbandvorrichtung vorhandene Vorrat an Umreifungsbandmaterial erschöpft ist und eine Nachlieferung erforderlich wird.

Darüber hinaus können die Verschlussdaten zur Dokumentation eingesetzt werden. Das ist im Zusammenhang mit Garantiefällen besonders vorteilhaft, um festzustellen, ob beispielsweise die Umreifungsbandvorrichtung entsprechend den Vorgaben betrieben und gewartet worden ist. Außerdem können die Verschlussdaten dahingehend ausgewertet werden, um zukünftigen Verschleiß zu prognostizieren und einem eventuellen Ausfall anderer ähnlich oder gleich aufgebauter Umreifungsbandvorrichtungen schon im Vorfeld zu begegnen. Dadurch kann ein entsprechender Ausfall praktisch von vorne herein ausgeschlossen und die dauerhafte Funktionssicherheit gewährleistet werden. Das war mit den bisher beschriebenen Verfahren in dieser Ausprägung nicht möglich. Hierin sind die wesentlichen Vorteile zu sehen.

Als weitere Sensoren zusätzlich zu der Kraftmessdose können ein Temperatursensor in einem Heizkeil, ein Zeitmessglied, ein Drucksensor im Andrückstempel und/oder in einer Gegenplatte, ein Wegesensor im Andrückstempel und/oder einem zusätzlichen Klemmstempel etc. einzeln oder in Kombination vorgesehen werden. Auch in diesem Fall werden die zugehörigen Sensorsignale der weiteren Sensoren an die Steuereinheit übermittelt und mit dem für das Umreifungsband spezifischen Parametern insgesamt zu den Verschlussdaten zusammengefasst, wie dies zuvor bereits beschrieben wurde.

Als weitere vorteilhafte Ausgestaltung ist vorgesehen, dass die Steuereinheit zumindest die Verschlussdaten über ein Rechnernetzwerk, beispielsweise das Internet, an eine übergeordnete Auswerteeinheit zur Sammlung und Auswertung der Verschlussdaten übermittelt. Hierbei geht die Erfindung von der Erkenntnis aus, dass die Steuereinheit typischerweise der Vorrichtung zur Herstellung der Umreifung bzw. einer entsprechenden Umreifungsbandvorrichtung zugeordnet ist, also einen Bestandteil der Umreifungsbandvorrichtung vor Ort darstellt. Demgegenüber kann die Auswerteeinheit zur Sammlung und Auswertung der Verschlussdaten an praktisch jedem beliebigen Ort weltweit vorhanden und realisiert werden. Beispielsweise mag die Auswerteeinheit beim Hersteller der entsprechenden Umreifungsbandvorrichtung angesiedelt sein, wohingegen die Steuereinheit als Bestandteil der Umreifungsbandvorrichtung beim jeweiligen Kunden und Anwender angesiedelt ist.

Damit die besonders relevanten Verschlussdaten an die Auswerteeinheit übermittelt werden können, ist das Rechnernetzwerk vorgesehen, welches die Steuereinheit mit der Auswerteeinheit zur Datenübermittlung koppelt. Die Datenübermittlung kann dabei selbstverständlich drahtgebunden oder drahtlos erfolgen. Da darüber hinaus in der Regel mehrere Steuereinheiten unterschiedlicher Umreifungsbandvorrichtungen ihre jeweiligen Verschlussdaten an die übergeordnete Auswerteeinheit senden, können in der Auswerteeinheit nicht nur die zuvor beschriebenen Auswertungen vorgenommen werden. Sondern mithilfe der Auswerteeinheit lassen sich auch statistische Aussagen treffen, die beispielsweise aus den Verschlussdaten abgeleitet werden. Grundsätzlich können über die Steuereinheit der Umreifungsbandvorrichtung auch weitere Daten neben den Verschlussdaten an die übergeordnete Auswerteeinheit über das Rechnernetzwerk übermittelt werden.

In der Regel verfügt die Verschlusseinheit neben dem Andrückstempel über wenigstens einen weiteren Klemmstempel. Meistens ist die Verschlusseinheit mit dem Andrückstempel und zwei beidseitigen Klemmstempeln ausgerüstet. Das heißt, der Andrückstempel wird zwischen zwei beidseitigen Klemmstempeln aufgenommen.

Außerdem ist die Auslegung meistens so getroffen, dass der Klemmstempel und der Andrückstempel mit einer Gegenplatte wechselwirken. Sofern in diesem Zusammenhang eine einzige durchgängige Gegenplatte in der Verschlusseinheit vorgesehen ist, wird eine besonders kompakte und kostengünstige Bauform realisiert. Denn sowohl der Andrückstempel als auch der eine oder die beiden Klemmstempel fahren wahlweise jeweils gegen die durchgängige Gegenplatte. Auf diese Weise wird das Umreifungsband zwischen dem betreffenden Klemmstempel und der Gegenplatte eingeklemmt. Sofern der Andrückstempel gegen die Gegenplatte fährt, wird auf diese Weise in der Regel der Verschluss der beiden zu verbindenden Bandenden realisiert, wie nachfolgend noch näher erläutert wird.

Die zuvor bereits angesprochene Kraftmessdose ist im Allgemeinen unter Zwischenschaltung gegebenenfalls einer Feder in einer Ausnehmung eines Stempelfortsatzes des Andrückstempels angeordnet. Außerdem erstreckt sich die Kraftmessdose meistens unterseitig über den Stempelfortsatz hinaus. Dadurch kann sich die Kraftmessdose auf einer Basis des Andrückstempels abstützen.

Das heißt, der Andrückstempel ist meistens zweiteilig aufgebaut und setzt sich aus der Basis und dem Stempelfortsatz zusammen, die in der Regel in gleicher Längserstreckung übereinander angeordnet sind und zusammen beaufschlagt werden. Die mechanische Verbindung zwischen der Basis und dem Stempelfortsatz wird dabei über die Kraftmessdose hergestellt. Sobald die Basis mit einer Kraft in der Regel in linearer Richtung beaufschlagt wird, fährt die Basis in Richtung auf den Stempelfortsatz und komprimiert hierbei die Kraftmessdose. Die dabei aufgebrachte Kraft wird in der Kraftmessdose in ein zur Kraft proportionales Sensorsignal umgewandelt, welches die Steuereinheit aufnimmt. Dadurch, dass die Kraftmessdose in einer Ausnehmung des Stempelfortsatzes angeordnet ist, beobachtet man für die Kraftmessdose eine geschützte Anbringung und sind etwaige Beschädigungen der Kraftmessdose nahezu ausgeschlossen. Die optionale und zwischengeschaltete Feder sorgt in diesem Zusammenhang beispielsweise dafür, dass geringfügige Kraftbeaufschlagungen des Andrückstempels von der Kraftmessdose nicht erfasst werden, sondern vielmehr zu einer mehr oder minder ausgeprägten Kompression der Feder korrespondieren. Das ist insbesondere bei einer schwingenden Beaufschlagung des Andrückstempels von Vorteil, weil hierdurch etwaige Schwingbewegungen von der Kraftmessdose ferngehalten werden und hierdurch ein dauerhafter und funktionssicherer Betrieb ohne Beschädigungen ermöglicht wird. Selbstverständlich ist die zwischengeschaltete Feder nur als Option anzusehen und nicht unbedingt notwendig.

Die Verschlusseinheit ist darüber hinaus noch mit ein- oder beidseitig angeschlossenen Bandführungen ausgerüstet. Über diese Bandführungen wird das Umreifungsband der Verschlusseinheit zugeführt bzw. beim Umschlingen des einen oder der mehreren Packstücke wird das Umreifungsband durch die Verschlusseinheit hindurchgeführt und über die angeschlossene Bandführung um das eine oder die mehreren Packstücke herumgeführt. Die beiden zu verbindenden Bandenden des Umreifungsbandes finden sich nach dem Umschlingen des einen oder der mehreren Packstücke innerhalb der Verschlusseinheit, damit hier der Verschluss wie beschrieben realisiert werden kann.

Für die Ansteuerung der Stempel sorgt im Allgemeinen eine Nockensteuerung. Mithilfe dieser Nockensteuerung werden die einzelnen Stempel, das heißt der eine oder die beiden Klemmstempel einerseits und der Andrückstempel andererseits, wahlweise und im Allgemeinen linear beaufschlagt. Zu diesem Zweck setzt sich die Nockensteuerung im Wesentlichen aus einer zentralen Nockenwelle und ein- oder beidseitigen Steuerhebeln zusammen. Mithilfe der zentralen Nockenwelle wird im Allgemeinen der Andrückstempel beaufschlagt. Der eine oder die beiden Steuerhebel sorgen demgegenüber dafür, dass der eine oder die beiden beidseitigen Klemmstempel ebenfalls linear beaufschlagt werden können.

Im Ergebnis werden ein Verfahren und eine Vorrichtung zur Herstellung einer Umreifung beschrieben, mit deren Hilfe nicht nur ein sicherer Verschluss der Bandenden des betreffenden Umreifungsbandes reproduzierbar hergestellt werden kann. Sondern es besteht darüber hinaus die Möglichkeit, die beim Verschlussvorgang entstehenden Verschlussdaten zu ermitteln und zu sammeln sowie auszuwerten. Hieraus lassen sich beispielsweise Erkenntnisse zum Verschleiß der Verschlusseinheit und im Hinblick auf zukünftige Wartungen gewinnen. Das alles gelingt ganz grundsätzlich und unabhängig davon, wie das Umreifungsband im Detail gestaltet ist bzw. wie der Verschluss ausgelegt ist.

Das heißt, die Erfindung kann nicht nur bei Umreifungsbändern aus Kunststoff zum Einsatz kommen, bei welchen die zu verbindenden Bandenden meistens durch eine Schweißverbindung miteinander gekoppelt werden. Sondern die Erfindung lässt sich darüber hinaus und genauso gut bei Metallbändern bzw. Stahlbändern einsetzen. In diesem Fall werden in der Verschlusseinheit mithilfe des Andrückstempels die zu verbindenden Bandenden durch Crimpen oder eine zusätzlich aufgeschobene Verschlusshülse miteinander gekoppelt. Sämtliche Vorgehensweisen sind erfindungsgemäß möglich und werden ausdrücklich mitumfasst.

Im Folgenden wird die Erfindung anhand einer lediglich ein Ausführungsbeispiel darstellenden Zeichnung näher erläutert: es zeigen:
- Fig. 1: eine Vorrichtung zur Herstellung einer Umreifung bzw. eine Umreifungsbandvorrichtung nach der Erfindung in einer Übersicht,
- Fig. 2: einen Ausschnitt aus der Fig. 1 im Bereich einer Verschlusseinheit beim Bandeinschuss,
- Fig. 3: den Gegenstand nach Fig. 2 beim Spannen des Umreifungsbandes,
- Fig. 4: den Gegenstand nach Fig. 3 beim Entspannen des Umreifungsbandes und Anschmelzen der zu verbindenden Bandenden und
- Fig. 5: die Bildung des Schweißverschlusses im Beispielfall.

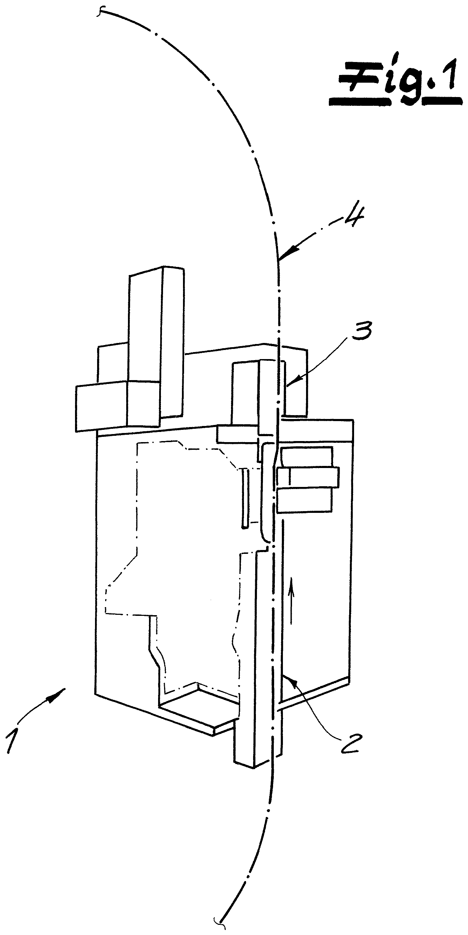

In den Figuren ist eine Vorrichtung zur Herstellung einer Umreifung bzw. eine Umreifungsbandvorrichtung dargestellt, die in ihrer grundsätzlichen Ausprägung und in einer Übersicht in der Fig. 1 gezeigt wird. Für die Vorrichtung und das ebenfalls noch zu beschreibende Verfahren zur Herstellung einer Umreifung ist zunächst einmal eine Verschlusseinheit 1 wesentlich, an die sich beidseitig Führungen 2, 3 für das Umreifungsband 4 anschließen. Bei dem Umreifungsband 4 handelt es sich nicht einschränkend um ein Umreifungsband 4 aus Kunststoff.

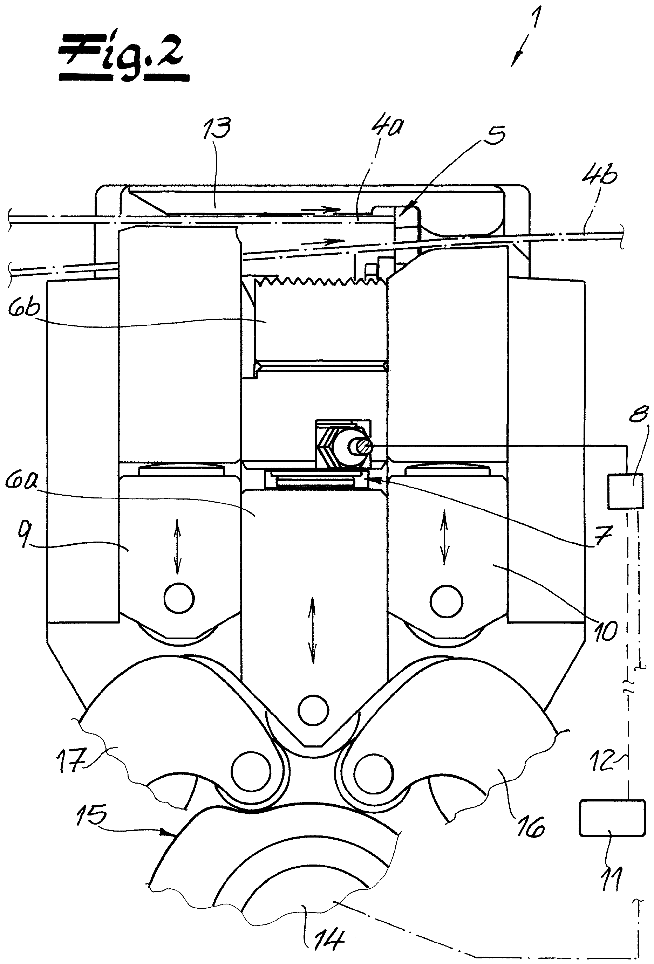

Die beiden beidseitig an die Verschlusseinheit 1 angeschlossenen Führungen bzw. Bandführungen 2, 3 sorgen dafür, dass das von einem nicht ausdrücklich dargestellten Bandvorrat zugeführte und um ein oder mehrere Packstücke herumgeführte Umreifungsband 4 an die betreffenden Packstücke angelegt und um diese herum geführt werden kann. Nachdem die Packstücke umschlungen worden sind, fährt ein Bandende 4a des Umreifungsbandes 4 gegen einen Anschlag 5 in der Verschlusseinheit 1, wie man in der Detaildarstellung nach der Fig. 2 erkennen kann. Sobald das Bandende 4a gegen den Anschlag 5 gefahren ist, wird der Umreifungsvorgang und ein damit verbundender Transport des Umreifungsbandes 4 gestoppt. Dieser Vorgang wird als Bandeinschuss bezeichnet und ist im Wesentlichen in der Fig. 2 dargestellt.

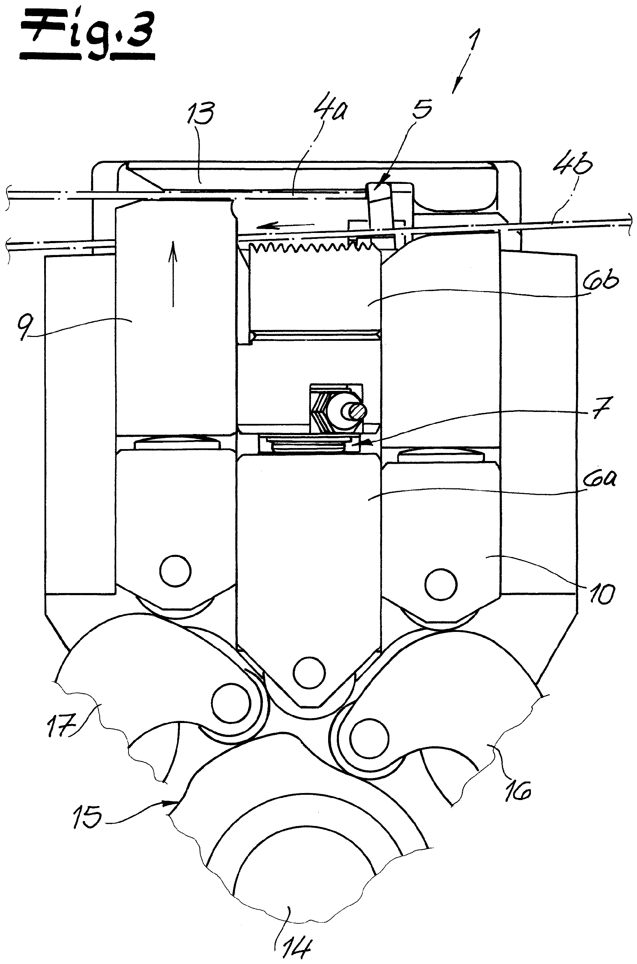

Nach dem Bandeinschuss entsprechend der Darstellung in der Fig. 2 wird das Band gespannt, es kommt also zum Bandspannen, wie dies die Fig. 3 zeigt. Der Spannvorgang bzw. der Bandeinschuss wird in den Figuren durch entsprechende Pfeile angedeutet, die die Bewegung des Umreifungsbandes 4 charakterisieren. Für den Bandeinschuss und das Bandspannen sorgen jeweils Antriebsrollen bzw. Spannrollen, die Bestandteil der Umreifungsbandvorrichtung nach der Fig. 1 sind, hier jedoch nicht näher interessieren.

Man erkennt, dass die Verschlusseinheit 1 zunächst einmal mit einem Andrückstempel 6a, 6b ausgerüstet ist. Der Andrückstempel 6a, 6b ist nach dem Ausführungsbeispiel zweigeteilt ausgelegt. Tatsächlich setzt sich der Andrückstempel 6a, 6b aus einer Basis 6a einerseits und einem Stempelfortsatz 6b andererseits zusammen, die voneinander beabstandet sind. Der Abstand zwischen der Basis 6a und dem Stempelfortsatz 6b wird von einer Kraftmessdose 7 überbrückt. Tatsächlich ist die Kraftmessdose 7 unter Zwischenschaltung gegebenenfalls einer nicht näher dargestellten Feder in einer Ausnehmung des Stempelfortsatzes 6b des Andrückstempels 6a, 6b angeordnet.

Da die Kraftmessdose 7 im Ausführungsbeispiel und nicht einschränkend flachzylindrisch ausgebildet ist, verfügt auch die nicht näher dargestellte Ausnehmung im Stempelfortsatz 6b des Andrückstempels 6a, 6b über eine entsprechende hohlzylindrische Ausprägung, die von ihrer Größe her an die hierin eingelassene flachzylindrische Kraftmessdose 7 angepasst ist. Die Auslegung ist dabei insgesamt so getroffen, dass sich die Kraftmessdose 7 unterseitig über den Stempelfortsatz 6b hinauserstreckt und hierdurch auf der Basis 6a des Andrückstempels 6a, 6b abstützen kann. Wird nun der Andrückstempel 6a, 6b linear mit Kraft beaufschlagt, so bewegt sich die Basis 6a auf den Stempelfortsatz 6b zu. Eine mithilfe des Andrückstempels 6a, 6b auf die beiden zu verbindenden Bandenden 4a, 4b des Umreifungsbandes 4 ausgeübte Kraft führt demzufolge dazu, dass die Kraftmessdose 7 kraftproportional verformt wird und hierdurch ein entsprechendes kraftproportionales Signal an eine an die Kraftmessdose 7 angeschlossene Steuereinheit 8 übermittelt.

Die Steuereinheit 8 ist als Bestandteil der Umreifungsbandvorrichtung ausgelegt bzw. dient dazu, den Andrückstempel 6a, 6b und nach dem Ausführungsbeispiel zwei beidseitige Klemmstempel 9, 10 zu beaufschlagen, wie dies nachfolgend erläutert wird. Dazu arbeitet die Steuereinheit 8 auf eine später noch zu beschreibende Nockensteuerung 14, 15, 16, 17. Außerdem ist die Steuereinheit 8 als Bestandteil der Umreifungsbandvorrichtung mit einer übergeordneten Auswerteeinheit 11 datentechnisch gekoppelt. Für die Kopplung sorgt ein Rechnernetzwerk 12. Die datentechnische Kopplung kann drahtlos oder drahtgebunden erfolgen. Meistens handelt es sich bei dem Rechnernetzwerk 12 um das Internet.

Sowohl der Andrückstempel 6a, 6b als auch die beiden beidseitig des Andrückstempels 6a, 6b vorhandenen Klemmstempel 9,10 arbeiten jeweils mit einer Gegenplatte 13 zusammen. Anhand des Ausführungsbeispiels erkennt man, dass die Verschlusseinheit 1 in diesem Zusammenhang über eine einzige und durchgängige Gegenplatte 13 verfügt, mit welcher sowohl die beiden Klemmstempel 9, 10 als auch der Andrückstempel 6a, 6b wechselwirken. Hierzu fahren die beiden Klemmstempel 9, 10 bzw. der Andrückstempel 6a, 6b jeweils gegen die Gegenplatte 13. Denn die fraglichen Stempel 6a, 6b; 9, 10 vollführen jeweils eine Linearbewegung, wie dies in der Fig. 2 durch entsprechende Doppelpfeile angedeutet ist.

Für die Linearbewegung der Stempel 6a, 6b, 9, 10 sorgt die Nockensteuerung 14, 15, 16, 17, welche von der Steuereinheit 8 beaufschlagt wird. Die Nockensteuerung 14, 15, 16, 17 stellt sicher, dass die fraglichen Stempel 6a, 6b, 9, 10 wahlweise linear in der durch jeweils einen Doppelpfeil in der Fig. 2 angedeuteten Linearrichtung beaufschlagt werden und hierbei gegen die Gegenplatte 13 fahren. Dazu verfügt die Nockensteuerung 14, 15, 16, 17 über eine zentrale Nockenwelle 14. Die zentrale Nockenwelle 14 ist mit einer umfangsseitigen Nockenkurve 15 ausgerüstet. Mithilfe der Nockenkurve 15 arbeitet die zentrale Nockenwelle 14 auf jeweils beidseitige Steuerhebel 16, 17. Der Steuerhebel 16 beaufschlagt dabei den im Ausführungsbeispiel rechten Klemmstempel 10, wohingegen der Steuerhebel 17 zur Linearbeaufschlagung des demgegenüber linken Klemmstempels 9 verantwortlich zeichnet.

Sämtliche Stempel 6a, 6b; 9, 10 sind fußseitig mit Rollen ausgerüstet, die sich auf den Steuerhebeln 16, 17 abwälzen bzw. auf der Nockenkurve 15 der Nockenwelle 14. Eine entsprechende Drehbewegung der Nockenwelle 14 führt nun dazu, dass die Stempel 6a, 6b; 9, 10 wahlweise und situationsbedingt linear angesteuert werden, wie dies nachfolgend noch näher erläutert wird.

Tatsächlich sorgt die die Nockensteuerung 14 bis 17 beaufschlagende Steuereinheit 8 zunächst einmal beim Bandeinschuss entsprechend der Darstellung in der Fig. 2 dafür, dass sämtliche Stempel 6a, 6b; 9, 10 von der Gegenplatte 13 entfernt sind, so dass das Umreifungsband 4 ungehindert die Verschlusseinheit 1 passieren kann. Beim Übergang von der Fig. 2 beim Bandeinschuss zum Bandspannen nach der Fig. 3 wird der linke Klemmstempel 9 linear verfahren, wie dies ein Pfeil in der Fig. 3 andeutet. Auf diese Weise wird das gegen den Anschlag 5 gefahrene Bandende 4a des Umreifungsbandes 4 festgeklemmt. Das andere Bandende 4b kann anschließend gespannt werden, wie dies ein entsprechender Pfeil im Umreifungsband 4 in der Fig. 3 andeutet.

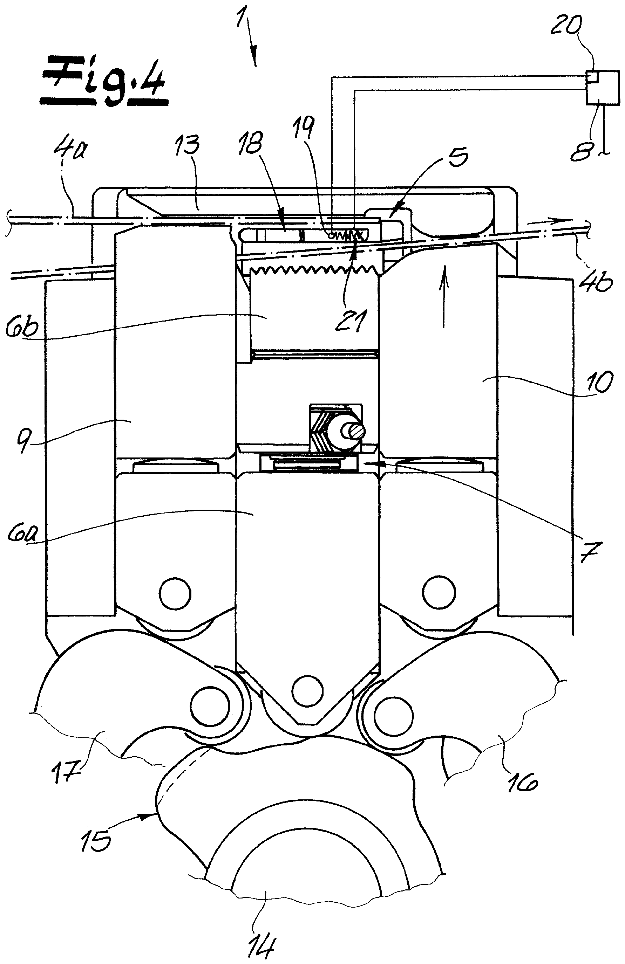

Beim Übergang von der Fig. 3 zur Fig. 4 kommt es nun zum Entspannen des Umreifungsbandes 4. In diesem Fall ist der linke Stempel 9 nach wie vor gegen die Gegenplatte 13 gefahren und sorgt dafür, dass das Bandende 4a festgeklemmt bleibt. Da das andere Bandende 4b des Umreifungsbandes 4 entlastet wird bzw. die Spannrollen keine Spannkraft mehr ausüben, kann in der Funktionsstellung nach der Fig. 4 eine erhitzte Heizzunge oder auch ein Heizkeil 18 zwischen die beiden Bandenden 4a, 4b des Umreifungsbandes 4 einfahren. Die Heizzunge bzw. der Heizkeil 18 sorgt nun dafür, dass die Bandenden 4a, 4b schmelzen bzw. angeschmolzen werden.

Um die Temperatur der Heizzunge bzw. des Heizkeils 18 zu erfassen, kann ein eingebetteter Temperatursensor 19 realisiert werden, dessen Sensorsignale ebenso wie die zuvor bereits angesprochenen Sensorsignale der Kraftmessdose 7 an die Steuereinheit 8 übermittelt werden. In Verbindung mit einem beispielsweise in der Steuereinheit 8 vorgesehenen und angedeuteten Zeitmessglied 20 kann nun die Heizzeit der Heizzunge 18 und auch beispielsweise ihre Temperatur vorgegeben werden, wenn die Steuereinheit 8 mit einer in der Fig. 4 zusätzlich angedeuteten (Widerstands-)Heizung 21 im inneren der Heizung 18 gekoppelt wird.

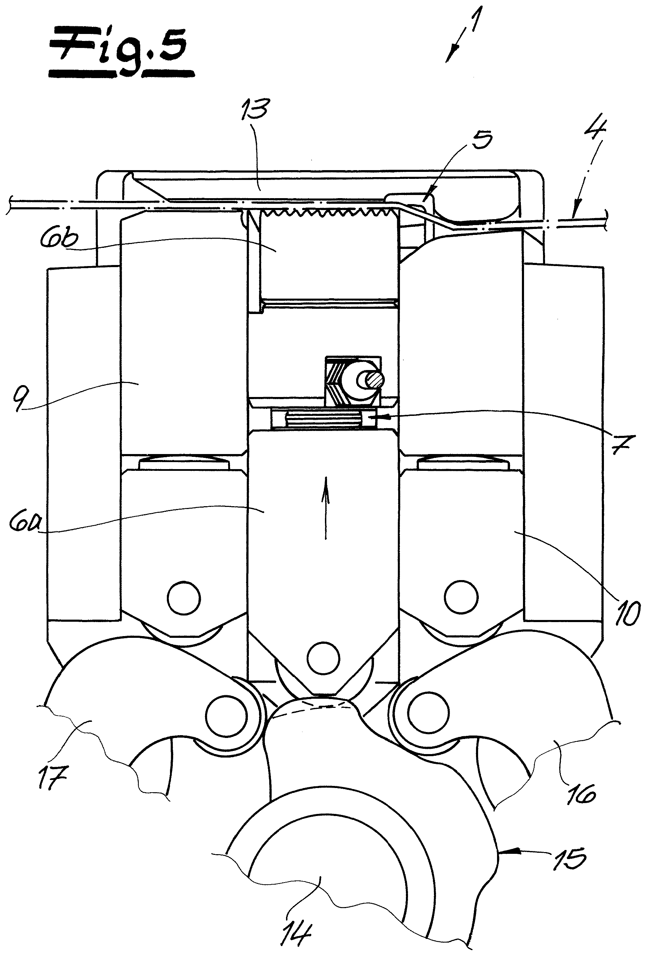

Jedenfalls können hierdurch gezielt die Bandenden 4a, 4b des Umreifungsbandes 4 aus Kunststoff angeschmolzen werden. Dabei lässt sich über die Heizung 21 in Verbindung mit dem Temperatursensor 19 sicherstellen, dass die betreffenden Bandenden 4a, 4b ausreichend angeschmolzen werden bzw. nicht durchschmelzen. Das geschieht abhängig von nachfolgend noch zu erläuternden Verschlussparametern. Dadurch befinden sich die Bandenden 4a, 4b in einem optimalen Zustand, wenn anschließend beim Übergang von der Fig. 4 zur Fig. 5 der Verschluss der beiden Bandenden 4a, 4b erfolgt. Beim in der Fig. 4 dargestellten Entspannen des Umreifungsbandes 4 und Anschmelzen der Bandenden von 4a, 4b wird der rechte Klemmstempel 10 gegen die Gegenplatte 13 gefahren und sorgt dafür, dass das andere Bandende 4b hierbei ebenfalls festgehalten wird.

Tatsächlich kommt es nun in der Fig. 5 zur Verschlussbildung. Dazu fährt der Andrückstempel 6a, 6b gegen die beiden zu verbindenden Bandenden 4a, 4b bzw. die Gegenplatte 13. Die beiden Bandenden 4a, 4b werden hierbei stoffschlüssig miteinander verbunden. Außerdem wird mithilfe der in den Andrückstempel 6a, 6b eingelassenen Kraftmessdose 7, die jeweils auf den Verschluss ausgeübte Kraft gemessen. Die entsprechenden Sensorsignale der Kraftmessdose 7 werden hierzu an die Steuereinheit 8 übermittelt. Zugleich sorgt die Steuereinheit 8 bei dem in der Fig. 5 dargestellten Verschluss bzw. der Verschlussbildung dafür, dass die Verschlusseinheit 1 und konkret der Andrückstempel 6a, 6b in Abhängigkeit von Verschlussparametern angesteuert wird.

Bei diesen Verschlussparametern mag es sich um Parameter des Umreifungsbandes 4 wie seine Breite, die Materialdicke und insbesondere der eingesetzte Kunstsoff, beispielsweise Polyethylen (PE), Polypropylen (PP) oder ein Gemisch beider Kunststoffe handeln. Jedenfalls werden diese Verschlussparameter seitens der Steuereinheit 8 berücksichtigt und wird die Verschlusseinheit 1 bzw. der Andrückstempel 6a, 6b entsprechend angesteuert. Die Verschlussparameter spielen natürlich auch schon im vorgeschalteten Vorgang beim Anschmelzen nach der Fig. 4 eine Rolle, wie dies in diesem Zusammenhang bereits beschrieben wurde.

Im Rahmen des Ausführungsbeispiels werden nicht nur die Sensorsignale der Kraftmessdose 7 in der Steuereinheit 8 aufgenommen. Sondern die Steuereinheit 8 erfasst auch weitere Sensorsignale, nach dem Ausführungsbeispiel Sensorsignale des Temperatursensors 19 ebenso wie Signale des Zeitmessgliedes 20. Diese sämtlichen Sensorsignale der weiteren Sensoren bzw. der Kraftmessdose 7, des Temperatursensors 19 und des Zeitmessgliedes 20 werden nun mit für das Umreifungsband spezifischen Parametern verknüpft. Bei diesen für das Umreifungsband spezifischen Parametern handelt es sich zunächst einmal um die zuvor bereits angesprochenen Verschlussparameter.

Das heißt, die für das Umreifungsband spezifischen Parameter (bzw. Verschlussparameter) beinhalten die geometrische Dimensionierung des Umreifungsbandes 4 beispielsweise hinsichtlich Materialdicke und Breite. Außerdem gehört hierzu der eingesetzte Werkstoff für das Umreifungsband 4 aus Kunstsoff. Zusätzlich und ergänzend können dann noch ermittelte Verschlussparameter wie die Temperatur und Dauer beim Anschmelzen, die aufgewandte Kraft für den Verschluss, das Herstellungsjahr des Umreifungsbandes, eine Chargennummer des eingesetzten Kunststoffes etc. Berücksichtigung finden. Diese für das Umreifungsband spezifischen Verschlussparameter können nun in der Steuereinheit 8 vorhanden bzw. in diese eingespeist und mit den zuvor bereits angesprochenen Sensorsignalen verknüpft werden. Die Verknüpfung der Sensorsignale mit den für das Umreifungsband spezifischen Verschlussparametern führt nun zusammengenommen auf Verschlussdaten.

Die Verschlussdaten können ausgewertet und gespeichert werden. Beispielsweise lassen sich hieraus Prognosen für einen Verschleiß der Verschlusseinheit 1 und insbesondere des Andrückstempels 6a, 6b sowie gegebenenfalls der Klemmstempel 9, 10 herleiten. Außerdem kann anhand der auf diese Weise realisierten Verschleißermittlung der Verschlusseinheit 1 eine zukünftige Wartung der Verschlusseinheit 1 angestoßen werden. Ferner lässt sich auf diese Weise der Verbrauch an Umreifungsbandmaterial bzw. eingesetzten Umreifungsbändern 4 ermitteln.

Diese sämtlichen Auswertungen anhand der Verschlussdaten werden im Regelfall nicht seitens der Steuereinheit 8 vorgenommen. Vielmehr werden hierzu die in der Steuereinheit 8 vorhandenen Verschlussdaten über das Rechnernetzwerk 12 an die übergeordnete Auswerteeinheit 11 übermittelt. Die Auswerteeinheit 11 ist folglich über den technischen Zustand der Umreifungsbandvorrichtung umfassend informiert. Denn von der Auswerteeinheit 11 können selbstverständlich nicht nur die Verschlussdaten gesammelt und ausgewertet werden. Sondern es lassen sich auch weitere Daten der Umreifungsbandvorrichtung über die Steuereinheit 8 und das Rechnernetzwerk 12 an die Auswerteeinheit 11 übermitteln. Dadurch ist die Auswerteeinheit 11 auch in der Lage, beispielsweise zu Dokumentationszwecken den Zustand der betreffenden Umreifungsbandvorrichtung wiederzugeben bzw. auch etwaige Aussagen über seine zeitliche Entwicklung zu treffen. Hierin sind die wesentlichen Vorteile zu sehen.

## Patentansprüche

1. Verfahren zur Herstellung einer Umreifung, wonach ein Umreifungsband (4) um wenigstens ein Packstück herumgeführt, gespannt und in einer Verschlusseinheit (1) an zu verbindenden Bandenden (4a, 4b) mit einem Verschluss ausgerüstet wird, und wonach zumindest ein an eine Steuereinheit (8) angeschlossener Sensor (7) in der Verschlusseinheit (1) vorgesehen ist, um einen oder mehrere Verschlussparameter mittels der Steuereinheit (8) zu erfassen und die Verschlusseinheit (1) entsprechend anzusteuern, **dadurch gekennzeichnet, dass** der Sensor (7) als in einen Andrückstempel (6a, 6b) der Verschlusseinheit (1) eingelassene Kraftmessdose (7) ausgebildet ist.

2. Verfahren nach Anspruch 1, **dadurch gekennzeichnet, dass** die Verschlusseinheit (1) neben dem Andrückstempel (6a, 6b) mit wenigstens einem weiteren Klemmstempel (9, 10) ausgerüstet wird.

3. Verfahren nach Anspruch 2, **dadurch gekennzeichnet, dass** der Klemmstempel (9, 10) und der Andrückstempel (6a, 6b) mit einer Gegenplatte (13) wechselwirken.

4. Verfahren nach Anspruch 3, **dadurch gekennzeichnet, dass** eine einzige durchgängige Gegenplatte (13) in der Verschlusseinheit (1) vorgesehen ist, gegen welche der Andrückstempel (6a, 6b) und der Klemmstempel (9, 10) wahlweise fahren.

5. Verfahren nach einem der Ansprüche 1 bis 4, **dadurch gekennzeichnet, dass** die Kraftmessdose (7) unter Zwischenschaltung gegebenenfalls einer Feder in einer Ausnehmung eines Stempelfortsatzes (6b) des Andrückstempels (6a, 6b) angeordnet ist, wobei sich die Kraftmessdose (7) unterseitig über den Stempelfortsatz (6b) erstreckt und auf einer Basis (6a) des Andrückstempels (6a, 6b) abstützt.

6. Verfahren nach einem der Ansprüche 1 bis 5, **dadurch gekennzeichnet, dass** Sensorsignale der Kraftmessdose (7) in der Steuereinheit (8) gegebenenfalls zusammen mit zusätzlichen Sensorsignalen weiterer Sensoren (19, 20) aufgenommen und mit den für das Umreifungsband (4) spezifischen Verschlussparametern verknüpft werden, um auf dieser Basis vorzugsweise eine Andrückkraft des Andrückstempels (6a, 6b) zu variieren.

7. Verfahren nach Anspruch 6, **dadurch gekennzeichnet, dass** als weitere Sensoren (19, 20) ein Temperatursensor (19) in einem Heizkeil (18), ein Zeitmessglied (20), ein Drucksensor im Andrückstempel (6a, 6b) und/oder in der Gegenplatte (13), ein Wegesensor im Andrückstempel (6a, 6b) und/oder im Klemmstempel (9, 10) etc. einzeln oder in Kombination vorgesehen sind und ihre Sensorsignale an die Steuereinheit (8) übermitteln.

8. Verfahren nach Anspruch 6 oder 7, **dadurch gekennzeichnet, dass** die Sensorsignale und die für das Umreifungsband (4) spezifischen Verschlussparameter zusammengenommen Verschlussdaten definieren.

9. Verfahren nach Anspruch 8, **dadurch gekennzeichnet, dass** die Verschlussdaten ausgewertet werden, beispielsweise zur Verschleißermittlung und Wartung der Verschlusseinheit (1), zur Ermittlung des Verbrauchs an Umreifungsbandmaterial, zur Dokumentation etc.

10. Verfahren nach einem der Ansprüche 8 oder 9, **dadurch gekennzeichnet, dass** die Steuereinheit (8) zumindest die Verschlussdaten über ein Rechnernetzwerk (12), beispielsweise das Internet, an eine übergeordnete Auswerteinheit (11) zur Sammlung und zum Auswerten der Verschlussdaten übermittelt.

11. Vorrichtung zur Herstellung einer Umreifung, mit einer Verschlusseinheit (1), in welcher zu verbindende Bandenden (4a, 4b) eines um wenigstens ein Packstück herumgeführten Umreifungsbandes (4) mit einem Verschluss ausgerüstet werden, und mit zumindest einem an eine Steuereinheit (8) angeschlossenen Sensor (7) in der Verschlusseinheit (1), wobei die Steuereinheit (8) ausgebildet ist einen oder mehrere Verschlussparameter zu erfassen und die Verschlusseinheit (1) entsprechend anzusteuern, **dadurch gekennzeichnet, dass** der Sensor (7) als in einen Andrückstempel (6a, 6b) der Verschlusseinheit (1) eingelassene Kraftmessdose (7) ausgebildet ist.

12. Vorrichtung nach Anspruch 11, **dadurch gekennzeichnet, dass** die Verschlusseinheit (1) mit ein oder beidseitig angeschlossenen Bandführungen (2, 3) ausgerüstet ist.

13. Vorrichtung nach Anspruch 11 oder 12, **dadurch gekennzeichnet, dass** die Verschlusseinheit (1) neben dem Andrückstempel (6a, 6b) mit zwei beidseitigen Klemmstempeln (9, 10) ausgerüstet ist.

14. Vorrichtung nach einem der Ansprüche 11 bis 13, **dadurch gekennzeichnet, dass** die Stempel (6a, 6b, 9,10) über eine Nockensteuerung (14, 15, 16, 17) wahlweise linear beaufschlagt werden.

15. Vorrichtung nach den Ansprüchen 13 und 14, **dadurch gekennzeichnet, dass** die Nockensteuerung (14, 15, 16, 17) eine zentrale Nockenwelle (14) aufweist, die den Andrückstempel (6a, 6b) beaufschlagt und über beidseitige Steuerhebel (16, 17) mit den beiden Klemmstempeln (9, 10) wechselwirkt.

## Claims

1. Method for producing strapping, according to which a strap (4) is wrapped around at least one package, tensioned and equipped with a closure in a closure unit (1) at strap ends (4a, 4b) to be connected, and according to which at least one sensor (7) connected to a control unit (8) is provided in the closure unit (1), in order to record one or a plurality of closure parameters by means of the control unit (8) and to correspondingly control the closure unit (1), **characterized in that** the sensor (7) is designed as a load cell (7) mounted in a press stamp (6a, 6b) of the closure unit (1).

2. Method according to Claim 1, **characterized in that** the closure unit (1) is equipped with at least one further clamping stamp (9, 10) alongside the press stamp (6a, 6b) .

3. Method according to Claim 2, **characterized in that** the clamping stamp (9, 10) and the press stamp (6a, 6b) interact with a counter-plate (13).

4. Method according to Claim 3, **characterized in that** one single continuous counter-plate (13) is provided in the closure unit (1), against which the pressure stamp (6a, 6b) and the clamping stamp (9, 10) optionally move.

5. Method according to one of Claims 1 to 4, **characterized in that** the load cell (7) is arranged in a recess of a stamp extension (6b) of the press stamp (6a, 6b) with the interposition of a spring if necessary, wherein the load cell (7) extends over the stamp extension (6b) at the bottom and rests on a base (6a) of the press stamp (6a, 6b).

6. Method according to one of Claims 1 to 5, **characterized in that** sensor signals of the load cell (7) are picked up in the control unit (8), possibly together with additional sensor signals of further sensors (19, 20), and are linked to the closure parameters specific to the strap (4) in order to preferably vary a pressure force of the press stamp (6a, 6b) based on this.

7. Method according to Claim 6, **characterized in that** a temperature sensor (19) in a heating wedge (18), a timing element (20), a pressure sensor in the press stamp (6a, 6b) and/or in the counter-plate (13), a position sensor in the press stamp (6a, 6b) and/or in the clamping stamp (9, 10) etc. are provided individually or in combination as further sensors (19, 20) and transmit their sensor signals to the control unit (8).

8. Method according to Claim 6 or 7, **characterized in that** the sensor signals and the closure parameters specific to the strap (4) together define closure data.

9. Method according to Claim 8, **characterized in that** the closure data are evaluated, for example for determining wear and tear and maintaining the closure unit (1), for determining the consumption of strap material, for documentation etc.

10. Method according to one of Claims 8 or 9, **characterized in that** the control unit (8) transmits at least the closure data via a computer network (12), for example the internet, to a superordinate evaluation unit (11) in order to collect and evaluate the closure data.

11. Device for producing strapping, having a closure unit (1), in which strap ends (4a, 4b), to be connected, of a strap (4) wrapped around at least one package are equipped with a closure, and having at least one sensor (7), connected to a control unit (8), in the closure unit (1), wherein the control unit (8) is designed to record one or a plurality of closure parameters and to correspondingly control the closure unit (1), **characterized in that** the sensor (7) is designed as a load cell (7) mounted in a press stamp (6a, 6b) of the closure unit (1).

12. Device according to Claim 11, **characterized in that** the closure unit (1) is equipped with strap guides (2, 3) connected at one or both sides.

13. Device according to Claim 11 or 12, **characterized in that** the closure unit (1) is equipped with two clamping stamps (9, 10) on both sides alongside the press stamp (6a, 6b).

14. Device according to one of Claims 11 to 13, **characterized in that** linear pressure is optionally applied to the stamps (6a, 6b, 9, 10) via a cam control (14, 15, 16, 17).

15. Device according to Claims 13 and 14, **characterized in that** the cam control (14, 15, 16, 17) has a central camshaft (14) that applies pressure to the press stamp (6a, 6b) and interacts with the two clamping stamps (9, 10) via control levers (16, 17) on both sides.

## Revendications

1. Procédé de fabrication d'un cerclage, selon lequel une bande de cerclage (4), passée autour d'au moins un paquet, est serrée et est dotée d'une fermeture dans une unité de fermeture (1) aux extrémités de bande (4a, 4b) à relier et selon lequel au moins un capteur (7) connecté à une unité de commande (8) est prévu dans l'unité de fermeture (1) pour saisir un ou plusieurs paramètres de fermeture au moyen de l'unité de commande (8) et piloter l'unité de fermeture (1) de façon correspondante, **caractérisé en ce que** le capteur (7) est constitué comme un capteur dynamométrique (7) encastré dans un poinçon de pression (6a, 6b) de l'unité de fermeture (1).

2. Procédé selon la revendication 1, **caractérisé en ce que** l'unité de fermeture (1) est dotée en plus du poinçon de pression (6a, 6b) d'au moins un autre poinçon de serrage (9, 10).

3. Procédé selon la revendication 2, **caractérisé en ce que** le poinçon de serrage (9, 10) et le poinçon de pression (6a, 6b) interagissent avec une contre-plaque (13).

4. Procédé selon la revendication 3, **caractérisé en ce qu'**une contre-plaque (13) continue unique est prévue dans l'unité de fermeture (1) contre laquelle le poinçon de pression (6a, 6b) et le poinçon de serrage (9, 10) se déplacent selon nécessité.

5. Procédé selon l'une quelconque des revendications 1 à 4, **caractérisé en ce que** le capteur dynamométrique (7) est disposé dans un logement d'un prolongement de poinçon (6b) du poinçon de pression (6a, 6b) en faisant intervenir le cas échéant un ressort, sachant que le capteur dynamométrique (7) s'étend côté inférieur sur le prolongement de poinçon (6b) et s'appuie sur une base (6a) du poinçon de pression (6a, 6b).

6. Procédé selon l'une quelconque des revendications 1 à 5, **caractérisé en ce que** des signaux de capteur du capteur dynamométrique (7) sont reçus dans l'unité de commande (8) le cas échéant avec des signaux de capteur supplémentaires d'autres capteurs (19, 20) et sont associés aux paramètres de fermeture spécifiques à la bande de cerclage (4) pour modifier sur cette base de préférence une force de pression du poinçon de pression (6a, 6b).

7. Procédé selon la revendication 6, **caractérisé en ce qu'**un capteur de température (19) dans un coin chauffant (18), un organe de mesure de temps (20), un capteur de pression dans le poinçon de pression (6a, 6b) et/ou dans la contre-plaque (13), un capteur de course dans le poinçon de pression (6a, 6b) et/ou dans le poinçon de serrage (9, 10) etc. sont prévus individuellement ou en combinaison en tant qu'autres capteurs (19, 20) et transmettent leurs signaux de capteur à l'unité de commande (8).

8. Procédé selon la revendication 6 ou 7, **caractérisé en ce que** les signaux de capteur et les paramètres de fermetures spécifiques à la bande de cerclage (4) définissent des données de fermeture regroupées.

9. Procédé selon la revendication 8, **caractérisé en ce que** les données de fermeture sont exploitées, par exemple pour déterminer l'usure et l'entretien de l'unité de fermeture (1), pour déterminer la consommation en matériau de bande de cerclage, pour documentation, etc.

10. Procédé selon l'une quelconque des revendications 8 ou 9, **caractérisé en ce que** l'unité de commande (8) transmet au mois les données de fermeture par le biais d'un réseau de calcul (12), par exemple Internet, à une unité d'exploitation supérieure (11) pour collecter et exploiter les données de fermeture.

11. Dispositif de fabrication d'un cerclage avec une unité de fermeture (1) dans laquelle les extrémités de bande (4a, 4b) à relier d'une bande de cerclage (4) passée autour d'au moins un paquet sont dotées d'une fermeture et avec au moins un capteur (7) dans l'unité de fermeture (1), connecté à une unité de commande (8), sachant que l'unité de commande (8) est constituée pour saisir un ou plusieurs paramètres de fermeture et pour piloter l'unité de fermeture (1) de façon correspondante, **caractérisé en ce que** le capteur (7) est constitué en tant que capteur dynamométrique (7) encastré dans un poinçon de pression (6a, 6b) de l'unité de fermeture (1).

12. Dispositif selon la revendication 11, **caractérisé en ce que** l'unité de fermeture (1) est dotée de guidages de bande (2, 3) raccordés d'un ou des deux côtés.

13. Dispositif selon la revendication 11 ou 12, **caractérisé en ce que** l'unité de fermeture (1) est dotée en plus du poinçon de pression (6a, 6b) de deux poinçons de serrage (9, 10) bilatéraux.

14. Dispositif selon l'une quelconque des revendications 11 à 13, **caractérisé en ce que** les poinçons (6a, 6b, 9, 10) sont sollicités selon nécessité de façon linéaire par le biais d'une commande à cames (14, 15, 16, 17).

15. Dispositif selon les revendications 13 et 14, **caractérisé en ce que** la commande à cames (14, 15, 16, 17) comporte un arbre à cames central (14) qui sollicite le poinçon de pression (6a, 6b) et interagit par le biais des leviers de commande (16, 17) bilatéraux avec les deux poinçons de serrage (9, 10).
